# EUROPEAN PATENT APPLICATION

(11) **EP 4 647 744 A1**
(43) Date of publication of application: **12.11.2025**
(21) Application number: 25175042.8
(22) Date of filing: 08.05.2025
(51) Int. Cl.: G01N 21/84, G01N 33/48, G01N 35/00, G01B 9/00, G01N 35/02, G01N 1/00, H04N 1/04, H04N 1/10

(54) **DEVICE FOR READING RAPID TESTS AND RESPECTIVE OPERATING METHOD**

(30) Priority: 08.05.2024 IT 202400010348
(71) Applicant: Cesari, Fabrizio, 06089 Torgiano (PG) (IT)
(72) Inventor: LORETI, Marco, 06034 Foligno (PG) (IT); GUBBINI, Mirco, 06034 Foligno (PG) (IT)
(74) Representative: Ercolani, Simone Pietro

(57) **Abstract**

Device (1) for reading rapid tests, comprising a base frame (2), capturing means (3) to capture one or more images of said rapid tests and an analyzing unit (4) to process said one or more images captured by said capturing means (3), characterized in that said capturing means (2) are movable relative to said frame (2) between a first position (P1), to capture one or more images of at least one first rapid test (11), and at least one second position (P2), to capture one or more images of at least one second rapid test (12).

## Description

### Technical field of the invention

Object of the invention is a device for reading rapid tests and respective operating method. Specifically, this reading device is used to read the results of these rapid tests, also known as rapid swab tests, for medical diagnosis. Subsequently, the results obtained after reading the rapid tests are made available to the user by these devices.

### Known prior art

According to known art, there are devices for reading rapid tests that comprise a base frame and capturing means to capture one or more images of these rapid tests. These reading devices further comprise an analyzing unit to process the images captured by the capturing means in order to determine the results of the rapid test.

These rapid tests are qualitative, meaning that they do not allow the quantitative value of the parameter whose trace they are supposed to detect to be determined, but they only establish whether it is present or absent above a threshold value. For example, rapid tests used to detect the Sars Covid virus can only reveal the possible presence of antigens, i.e., certain protein components (Nucleocapsid protein-N protein), of Sars Covid virus in the mucosal sample taken from the patient. Therefore, these rapid tests do not allow the viral load to be detected.

In case the Sars Covid virus is detected, the rapid test consists of an absorbent strip that is able to detect COVID-19 antigens through visual interpretation of color development on the test region of the membrane arranged on the aforementioned strip. If there is a sufficient number of COVID-19 antigens in the sample, a colored band will form at the test region of the membrane. The presence of a colored band in the test region reveals a positive result for the particular viral antigens, whereas its absence reveals a negative result.

The reading device is able to capture the image of the rapid test and, thanks to the analyzing unit and software installed therein, it is able to interpret the result and provide a final diagnosis.

In addition to the Sars Covid virus detection test, there are several other rapid tests (or swab tests) such as, for example, test for Streptococcus, Syphilis, Tuberculosis, Tetanus, Mycoplasma, Pylori, Alcohol, Anti-drugs, and many more. In addition to being available in the form of a strip made of absorbent material, rapid tests also come in other types that are well known to those skilled in the art, such as in the form of a cup or much more.

Unfortunately, these reading devices are made to read only one type of rapid tests. In particular, indeed, these devices comprise only one housing that can accommodate few types of these rapid tests. For example, a rapid test device in the shape of an elongated plate will not be able to read the results of rapid tests conducted on a multi-drug cup test. Indeed, this type of rapid test would not be positionable within a housing created specifically for rapid tests with an elongated plate shape.

Moreover, the rapid tests for example used to detect the presence of the Sars Covid virus are not all the same but can also have very different shapes, therefore a reading device from a particular manufacturer may not be able to read rapid tests produced by other manufacturers even if the shape is quite similar such as, for example, an elongated plate, but its size may not be compatible with the housing in the reading device.

Document KR1022199639B1 in the name of Catholic Univ Korea Ind Academic Cooperation Foundation describes a device for reading rapid tests, comprising a basic frame and capturing means to capture one or more images of said rapid tests and an analyzing unit to process said one or more images captured by said capturing means.

Therefore, object of the present invention is to make a device for reading rapid tests that allows rapid tests of different shapes and types, such as, for example, of the plate type and/or the cup type, to be analyzed.

Further object of the present invention is to make a device for reading rapid tests that is, in any case, structurally simple and also easy for the user to operate.

Finally, object of the present invention is also to provide a method to allow rapid tests of different shapes and types, for example of the plate type and the cup type, to be analyzed.

### Summary of the invention

The above-mentioned objects are achieved by a device for reading rapid tests according to claim 1.

In particular, this device for reading rapid tests comprises a base frame, capturing means to capture one or more images of said rapid tests and an analyzing unit to process said one or more images captured by said capturing means, characterized in that said capturing means are movable relative to said frame between a first position, to capture one or more images of at least one first rapid test, and at least one second position, to capture one or more images of at least one second rapid test.

The reading device is used on at least one first rapid test for medical diagnosis and/or at least one second rapid test for medical diagnosis.

This solution allows the proposed objects to be achieved. Indeed, since the capturing means can move from a first position to a second position, it is possible to set up two separate housings having distinct shapes to be able to capture the reading of two distinct types of rapid tests used for medical diagnosis.

According to a preferred non-limiting embodiment, the reading device further comprises a first housing to house said at least one first rapid test, wherein said first housing is constrained to said base frame at said first position or it can be reversibly constrained to said base frame at said first position.

According to a further non-limiting embodiment, said device comprises a second housing to house said at least one second rapid test which can be reversibly constrained to said capturing means or is constrained to said capturing means, in such a position that said capturing means can capture one or more images of said at least one second test when in said at least one second position; preferably said at least one second housing can be constrained to said capturing means only if said capturing means are in said second position.

According to a preferred embodiment, said capturing means are rotationally constrained to said base frame about a horizontal axis between said first position and said second position, and vice versa; preferably, said second position is arranged at an angle greater than 90° compared to said first position.

It should be noted that in a preferred embodiment alternative to that described above, these capturing means are translatably constrained to said frame between said first position and said second position, and vice versa.

According to a preferred embodiment, capturing means comprise at least one video camera or camera, of the digital type.

Again, said capturing means further comprise one or more light sources, preferably of the LED type.

Furthermore, said capturing means comprise a chamber having a first open surface facing said first housing, or said second housing, when in said first position, or in said second position, a second surface opposite said first surface, and a side surface connecting said first open surface and said second surface; said video camera, or camera, is arranged at said second surface of said chamber opposite said first surface of said chamber.

In particular, said chamber is in the shape of a truncated pyramid or in the shape of a truncated cone, wherein said first surface corresponds to the larger base and said second surface corresponds to said smaller base.

Preferably, said one or more light sources are arranged so as to be integrally constrained to the side surface of said chamber.

According to a preferred aspect, said first housing is movably constrained to said frame between a first position, to allow said first rapid test to be loaded into said first housing, and a second position, to allow said one or more images to be captured by said capturing means. Preferably, this rotation takes place along a vertical axis.

According to a further preferred aspect, the reading device comprises constraining means to removably constrain said second housing to said capturing means. In particular, said removably constraining means comprise at least one ferromagnetic element and at least one magnet, wherein said ferromagnetic element is integrally constrained to said capturing means and said magnetic element is integrally constrained to said second housing, or vice versa.

Moreover, said removably constraining means further comprise at least one guide protruding from said second housing and at least one corresponding cavity made in said capturing means and able to accommodate said at least one guide, or vice versa.

The objects are also achieved thanks to a method for operating a rapid test reading device according to one or more of claims 1 to 12, characterized by comprising the step a) of moving said capturing means relative to said frame between a first position, to capture one or more images of at least one first rapid test, and at least one second position, to capture one or more images of at least one second rapid test, and the step b) of analyzing said one or more images captured by said capturing means.

Furthermore, the method comprises, prior to said step a), the step a01) of placing said at least one first rapid test into a first housing and/or the step a02) of placing said at least one second rapid test into at least one second housing.

According to a particular embodiment, the step c) of removably constraining said at least one second housing to said capturing means is included prior to said step a02). Preferably, said step c) takes place only if said capturing means are in said second position and said first position can be reached by said capturing means only if said at least one second housing has been released from said at least one base frame.

### Brief description of the figures

Reference will be made to the figures in the attached drawings, wherein:

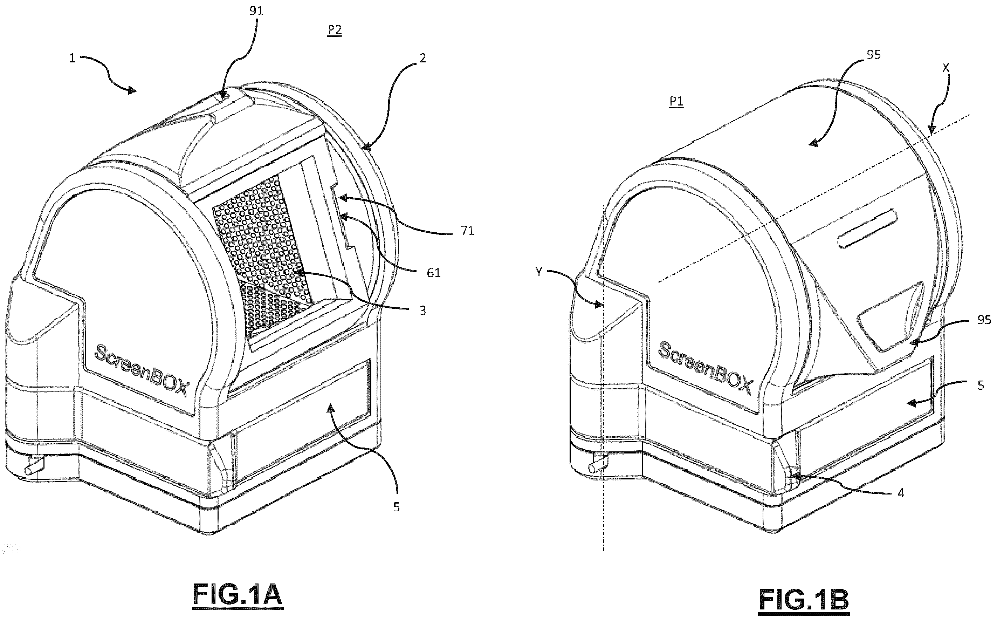

- Figure 1A shows a front axonometric view of the device for reading rapid tests according to the invention, in which the capturing means are in the first position;
- Figure 1B shows a front axonometric view of the device for reading rapid tests according to the invention, in which the capturing means are in the second position;

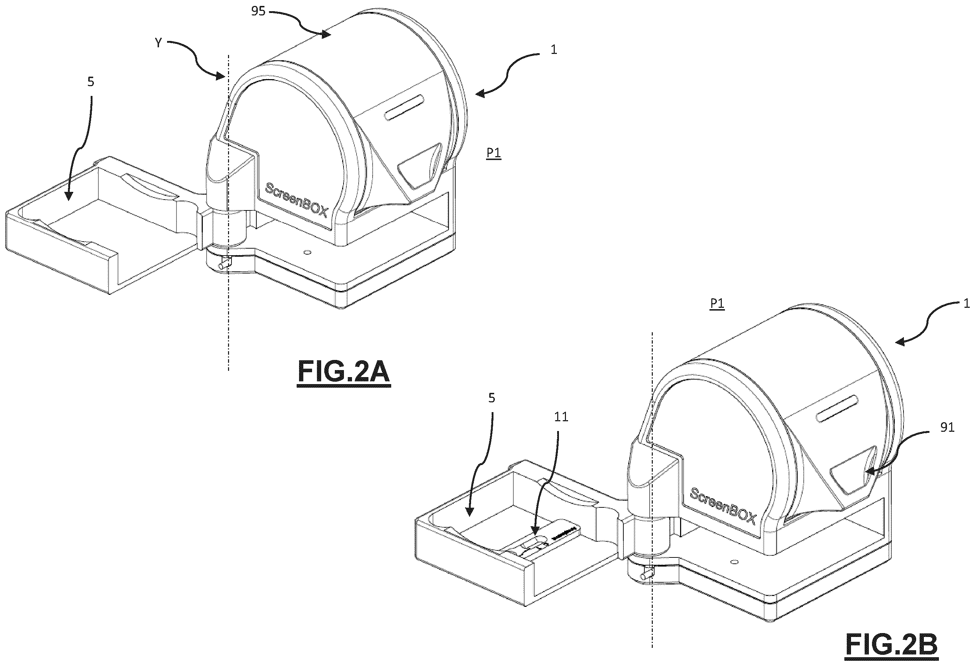

- Figure 2A shows an axonometric view of the reading device in which the first housing is shown in its rapid test loading position;
- Figure 2B shows an axonometric view of the reading device in which the first housing containing the rapid test is shown;

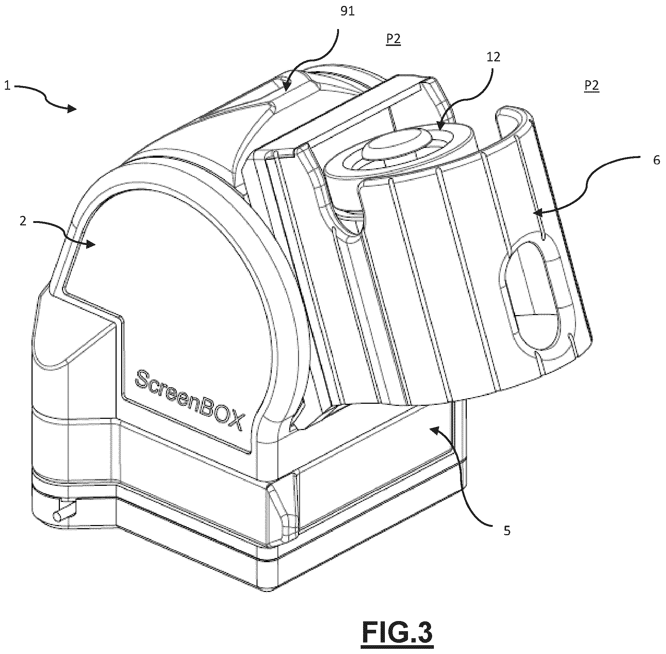

- Figure 3 shows an axonometric view of the reading device in which the second housing is constrained to said capturing means and the capturing means are in their second position;

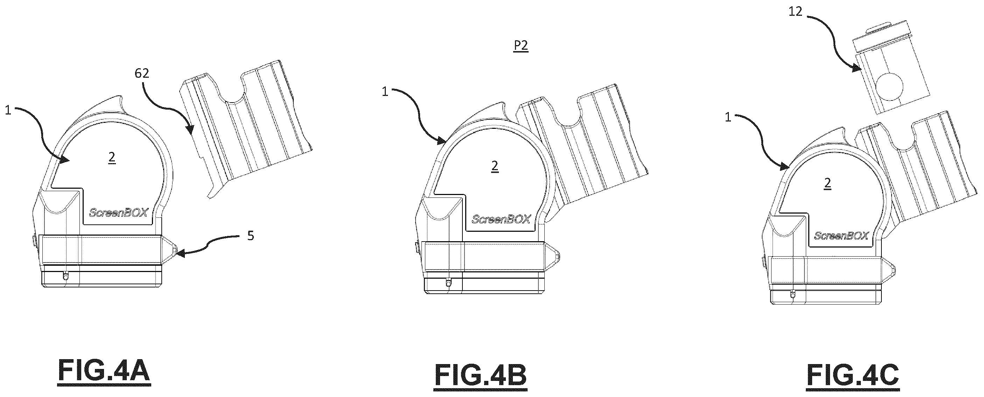

- Figures 4A-4C show different steps of assembling the second housing to the capturing means, the insertion of the second rapid test into the second housing;

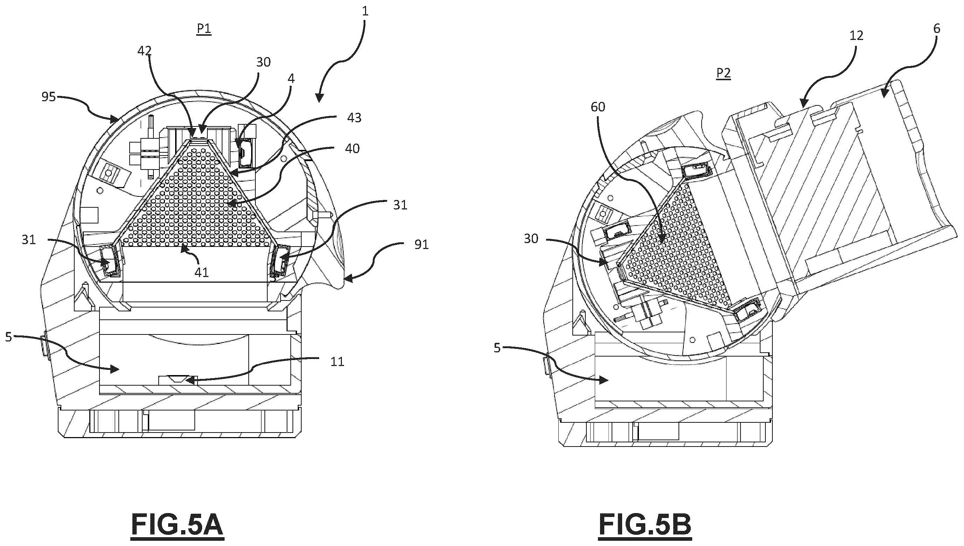

- Figure 5A shows a longitudinal sectional view of the rapid test device with the capturing means in their first position and with the first rapid test in the first housing;
- Figure 5B shows a longitudinal sectional view of the rapid test device with the capturing means in their second position and with the second rapid test in the second housing;
- Figures 6A-6D show several steps of assembling an additional second housing (distinct from that shown in figures 4A-4C) to the capturing means and the insertion of a second rapid test into that additional second housing.

### Detailed description of preferred embodiments

Various embodiments and variants of the invention will be described hereunder, and this with reference to the figures set forth above. Specifically, the device for reading rapid test according to the invention, which is used for medical diagnosis, will be denoted by the numeral 1.

This device 1 for reading rapid tests, which are used for medical diagnosis, comprises a base frame 2, capturing means 3 to capture a plurality of images of the rapid tests and an analyzing unit 4 to process these images captured by the capturing means 3.

According to a preferred non-limiting aspect of the invention, the capturing means 2 are movable relative to the base frame 2 between a first position P1, to capture one or more images of a first rapid test 11, and a second position P2, to capture one or more images of at least one second rapid test 12. In practice, the capturing means 3 can reach two stable positions P1 and P2 at which they carry out the capture of the images of the rapid tests, which have been previously arranged in a favorable position for this purpose. It should be noted that the number of stable positions that the capturing means 3 can reach can also be more than two, without thereby departing from the protection scope of the present invention.

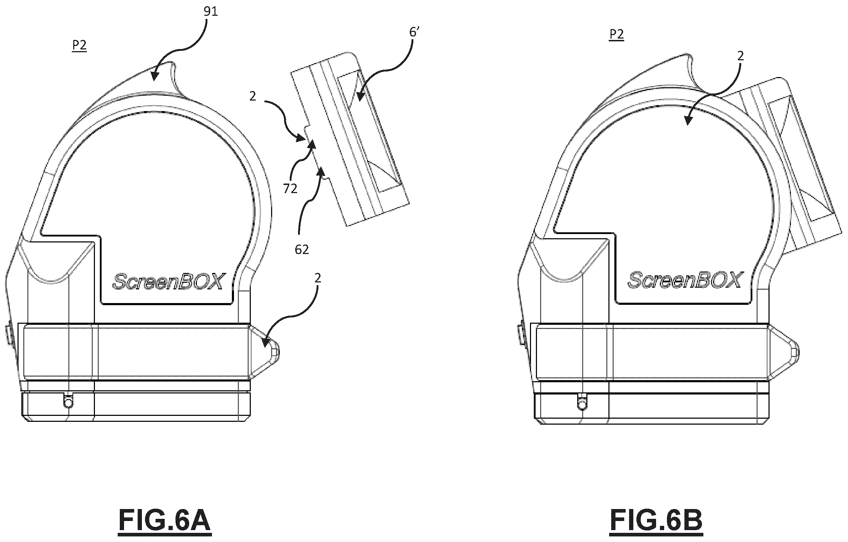

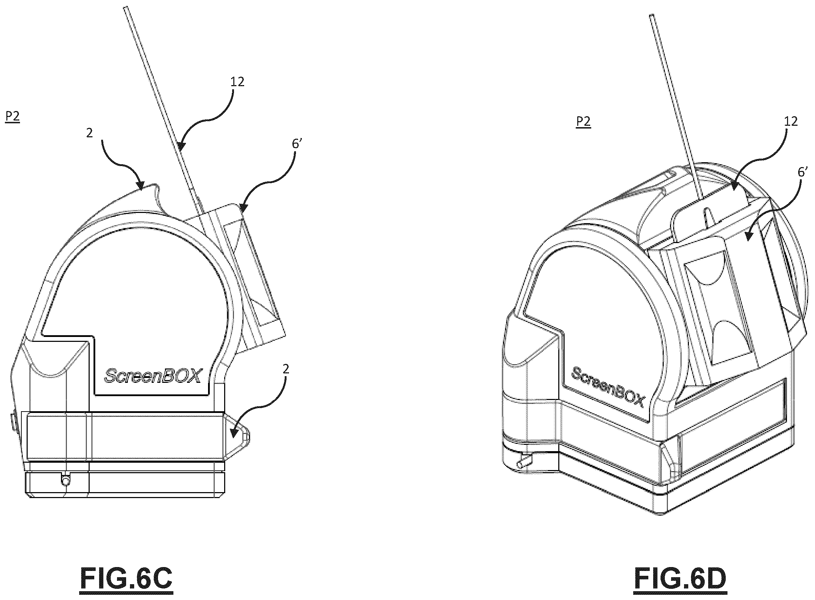

Specifically, the first rapid test 11 is of the elongated plate type, whereas the second rapid test 12 is of the cup type. In any case, the invention also covers solutions in which both the first rapid test 11 and the second rapid test 12 are in the shape of an elongated plate (as shown in Figures 6A to 6D, or cup or other type, without thereby departing from the protection scope of the present invention.

According to the preferred non-limiting embodiment shown in the attached figures, the device 1 for reading rapid tests further comprises a first housing 5 to house the first rapid test 11. This first housing 5 is constrained to the base frame 2 and arranged in such a position that the capturing means 3 can capture one or more images of the first rapid test 11 when in the first position P1.

According to a preferred non-limiting embodiment shown in the attached figures, the reading device 1 comprises a second housing 6 to house the second rapid test 12. This second housing 6 is reversibly constrained to the capturing means 3 in such a position that the capturing means 3 can capture one or more images of the second rapid test 12 when in the second position P2.

According to a further preferred non-limiting embodiment, the first housing 5 can be reversibly constrainable, then separable, to/from the capturing means 3 and the second housing 6 can be constrained to the base frame 2, or both the housings can be reversibly constrainable, thus separable, to/from the capturing means 3 or base frame.

According to a preferred non-limiting embodiment not shown in the attached figures, this second housing 6, instead of being constrained to the capturing means 3, can be reversibly constrained to the base frame 2. It should be noted that the removable constraint of the second housing 6 to the capturing means 3 turns out to be more accurate in terms of coupling and rapid test result to be verified. Indeed, in case of removable coupling of the second housing 6 to the base frame 2, any defective rotation of the capturing means 3 relative to the base frame 2 could lead to errors in the evaluation of the rapid test to be analyzed.

Preferably, the capturing means 3 are rotationally constrained to the base frame 2 about a horizontal axis X. Preferably, the second position P2 can be arranged at an angle greater than 90° compared to the first position P1.

Additionally, the capturing means 3 comprise a video camera 30.

Alternatively, the capturing means 3 comprise a camera.

Thanks to this video camera 30, or camera, the image of the first rapid test 11 and/or the second rapid test 12 can be captured and then, thanks to the analyzing unit 4 which exploits dedicated software, the captured image can be processed and from this it is possible to determine whether the rapid test is positive or negative in detecting the parameter associated with the diagnosis to be made.

Again, the capturing means 3 further comprise two light sources 31 preferably of the LED type. The number of light sources can also be more than two, without departing from the protection scope of the present invention.

As shown in the attached figures, the capturing means 3 comprise a chamber 40 having a first open surface 41 facing the first housing 5, or the second housing 6, when in the first position P1, or in the second position P2, a second surface 42 opposite the first surface 41, and a side surface 43 connecting the first open surface 41 and the second surface 42. Advantageously, the video camera 30, or the camera, is arranged at the second surface 42 of the chamber 40 opposite the first surface 41 of the chamber 40.

In addition, the chamber 40 is advantageously in the shape of a truncated pyramid, or in the shape of a truncated cone in an embodiment not shown herein, in which the first surface 41 corresponds to the larger base and the second surface 42 corresponds to the smaller base of the truncated pyramid.

In the embodiment described and shown herein, the two light sources 31 are arranged so as to be integrally constrained to the side surface 43 of the chamber 40.

According to a preferred non-limiting embodiment, the first housing 5 is movably constrained to the base frame 2 between a loading position, to allow the first rapid test 11 to be loaded into the first housing 5, and a capturing position, to allow the images of the first rapid test 11 to be captured by the capturing means 3.

Specifically, this first housing 5 is constrained to the base frame 2 so as to be rotatable about a vertical Y axis.

Furthermore, the reading device 1 comprises constraining means to removably constrain the second housing 6 to the capturing means 3.

These removable constraining means comprise a pair of ferromagnetic elements 61 (only one of the two ferromagnetic elements being visible in the images) and a corresponding pair of magnets 62 (only one of the two magnets being visible in the images), in which the ferromagnetic elements 61 are integrally constrained to the capturing means 3 and the magnetic elements 62 are integrally constrained to the second housing 6, or vice versa in the case of an alternative embodiment.

Additionally, said removable constraining means further comprise two guides 72 (only one of which being visible in the images) protruding from the second housing 6 and two corresponding cavities 71 (only one of which being visible in the images) made on the capturing means 3 and able to accommodate the guides 72, or vice versa in the case of an alternative embodiment.

In practice, the second housing 6, or any additional second housing also having different shapes, such as the housing 6' shown in Figures 6A-6D, will be able to be constrained to the capturing means 3 either by the magnets 62 and the corresponding ferromagnetic elements 61 or by the two guides 71 and the corresponding cavities 72 which are able to accommodate these guides 71. Preferably, the guides 72 are arranged at the magnetic elements 62 and the cavities 71 are arranged at the ferromagnetic elements 61.

According to a preferred non-limiting embodiment, the capturing means 3 comprise a gripping element 91 preferably placed outside the base frame 2 and able to be grasped by a user to move the capturing means 3 from the first position P1 to the second position P2. This gripping element 91, when the second housing 6 or 6' is not constrained to the capturing means 3, allows the movement of said capturing means 3 from the second position P2 to the first position P1, and vice versa.

Again, the capturing means 3 comprise a second frame 95 in the shape of a cylindrical portion that, in the embodiment described herein, extends through an angle greater than 180°. The video camera 30, or camera, the chamber 40 and the light sources 31 are arranged inside this second frame 95 and, therefore, rotate when the second frame 95 is rotated about the horizontal axis X. The gripping element 91 is arranged on the outer surface of the second frame 95.

Hereinafter the operating method of the reading device 1.

This method for operating a rapid test reading device 1 of the type described above and, anyhow, according to one or more of claims 1 to 12, comprises the step a) of moving the capturing means 3 relative to the frame 2 between a first position P1, to capture one or more images of the first rapid test 11, and at least one second position P2, to capture one or more images of the second rapid test 12, and the step b) of analyzing said one or more images captured by the capturing means 3.

Furthermore, the method comprises, prior to the step a), the step a01) of positioning a first rapid test into the first housing 5 and/or the step a02) of positioning the second rapid test 12 into the second housing 6 or 6'.

Again, the step c) of removably constraining the second housing 6 or 6' to the capturing means 3, is included prior to the step a02).

Preferably, said step c) can only take place if the capturing means 3 are in said second position P2. Said first position P1 is therefore reachable by said capturing means 3 only if said at least one second housing 6, 6' has been released from said capturing means 3.

## Claims

1. Device (1) for reading rapid tests, comprising a base frame (2), capturing means (3) to capture one or more images of said rapid tests and an analyzing unit (4) to process said one or more images captured by said capturing means (3), **characterized in that** said capturing means (3) are movable relative to said frame (2) between a first position (P1), to capture one or more images of at least one first rapid test (11), and at least one second position (P2), to capture one or more images of at least one second rapid test (12).

2. Device according to claim 1, wherein it further comprises a first housing (5) to house said at least one first rapid test (11), said first housing being constrained to said base frame (2) or being able to be reversibly constrained to said base frame (2), in such a position that said capturing means can capture one or more images of said at least one first rapid test (11), when in said first position (P1).

3. Device according to claim 1 or 2, wherein it comprises at least one second housing (6,6') to house said at least one second rapid test (12) which can be reversibly constrained to said capturing means (3) or is reversibly constrained to said capturing means (3), or is constrained to said base frame, in such a position that said capturing means can capture one or more images of said at least one second test (12) when in said at least one second position (P2), preferably said at least one second housing (6,6') being able to be constrained to said capturing means (3) only if said capturing means (3) are in said second position (P2).

4. Device according to one or more of claims 1 to 3, wherein said capturing means (3) are rotationally constrained to said base frame (2) about a horizontal axis (X), preferably said second position (P2) being arranged at an angle greater than 90° compared to said first position (P1).

5. Device according to one or more of claims 1 to 4, wherein the capturing means (3) further comprise one or more light sources (31), preferably of the LED type.

6. Device according to one or more of claims 2 to 5, wherein said capturing means (3) comprise a chamber (40) having a first open surface (41) facing said first housing (5), or said second housing (6), when in said first position (P1), or in said second position (P2), a second surface (42) opposite said first surface (41), and a side surface (43) connecting said first open surface (41) and said second surface (42), said video camera (30), or camera, being arranged at said second surface (42) of said chamber (40) opposite said first surface (41) of said chamber (40).

7. Device according to claim 6, wherein said chamber (40) is in the shape of a truncated pyramid, or in the shape of a truncated cone, wherein said first surface (41) corresponds to the larger base and said second surface (42) corresponds to said smaller base.

8. Device according to claim 6 or 7, wherein said one or more light sources (31) are arranged so as to be integrally constrained to the side surface (43) of said chamber (40).

9. Device according to one or more of claims 1 to 8, wherein it comprises constraining means to removably constrain said at least one second housing (6,6') to said capturing means (3).

10. Device according to claim 9, wherein said removably constraining means comprise at least one ferromagnetic element (61) and at least one magnet (62), wherein said ferromagnetic element (61) is integrally constrained to said capturing means (3) and said magnetic element (62) is integrally constrained to said second housing (6,6'), or vice versa.

11. Device according to claim 9 or 10, **characterized in that** said removably constraining means further comprise at least one guide (72) protruding from said second housing (6,6') and at least one corresponding cavity (71) constrained to said capturing means (3) and able to accommodate said at least one guide (72), or vice versa.

12. Device according to one or more of claims 3 to 11, **characterized in that** said capturing means (3) comprise at least one gripping element (91), preferably placed externally to said base frame (2) and able to be grasped by a user in order to move said capturing means (3) from said first position (P1) to said second position (P2), and vice versa.

13. Method for operating a rapid test reading device (1) according to one or more of claims 1 to 12, **characterized by** comprising the step a) of moving, preferably rotating about a horizontal axis (X), said capturing means (3) relative to said frame (2) between a first position (P1), to capture one or more images of at least one first rapid test, and at least one second position (P2), to capture one or more images of at least one second rapid test (12), and the step b) of analyzing said one or more images captured by said capturing means.

14. Method according to claim 13, wherein it comprises, prior to said step a), the step a01) of placing said at least one first rapid test into a first housing and/or the step a02) of placing said at least one second rapid test into at least one second housing.

15. Method according to claim 14, wherein it comprises, prior to said step a02), the step c) of removably constraining said second housing (6,6') to said capturing means (3), preferably said step c) being able to take place only if said capturing means (3) are in said second position (P2).
